# EUROPEAN PATENT SPECIFICATION

(11) **EP 1 510 734 B1**
(45) Date of publication and mention of the grant of the patent: **24.10.2007**
(21) Application number: 04019009.2
(22) Date of filing: 11.08.2004
(51) Int. Cl.: F16J 15/08

(54) **Sealing gasket with flexible stopper**
Dichtung mit flexiblem Stopper
Joint d'étanchéité avec butée flexible

(30) Priority: 28.08.2003 US 650339
(43) Date of publication of application: 02.03.2005
(73) Proprietor: Carl Freudenberg KG, 69469 Weinheim (DE)
(72) Inventor: Novil, Martin, Northville, MI 48167 (US); Kong, Yingjie, Canton, MI 48188 (US); Anderson, Scott M., Canton, MI 48188 (US); Wangerow, Roland W., Novi, MI 48375 (US)

(56) References cited:
- EP-A- 0 893 630
- EP-A- 0 999 387
- EP-A- 1 128 099
- DE-A- 1 907 682
- US-A- 5 938 208
- US-A1- 2002 000 696
- PATENT ABSTRACTS OF JAPAN vol. 1997, no. 07, 31 July 1997 (1997-07-31) & JP 09 068281 A (NIPPON REINZ CO LTD), 11 March 1997 (1997-03-11)

## Description

### BACKGROUND AND SUMMARY OF THE INVENTION

The invention relates to a gasket according to the preamble of claim 1.

Conventional gaskets, such as those used to seal between a cylinder head and cylinder block of an internal combustion engine, include two or more carrier members, such as those composed of spring steel, having various embossments to achieve proper sealing as well as the recovery needed to accommodate dynamic lifting of the cylinder head or other relative movement between the head and block. Such gaskets frequently include a stopper, which is an additional thin strip of metal or other material having a high stiffness. The stopper is located adjacent or near the combustion opening of the gasket in order to distribute sufficient load around the combustion opening area to properly seal and to prevent over-compression of adjacent combustion sealing embossments. In such constructions, the stopper is typically welded onto the carrier or formed from a folded-over portion of the carrier around the circumference of the combustion opening. In these designs, the stopper acts as the primary seal, with one or more other embossments acting as a secondary seal.

Although performing relatively well, such prior art constructions often suffer from certain disadvantages caused by the high rigidity of the stopper, such as high bore distortion, cylinder liner recessing, and inadequate accommodation of dynamic head lifting. Such disadvantages are frequently aggravated by the location of such highly rigid stoppers at or closely adjacent the combustion opening of the gasket, the cylinder head and the cylinder block.
EP 0 893 630 A2 shows a gasket whose inner sealing portion has nearly the same longitudinally offset as the flexible stopper portion has.
EP 1 128 099 A2 shows a gasket comprising a metallic shim. JP 09068281 A shows a gasket comprising a sealant layer formed by rubber paint.
US 5,938, 208 A shows a gasket comprising a stopper folded.
US 2002/0000696 A1 shows a gasket comprising a sealing material.
EP 0 999 387 A2 discloses a gasket comprising a region to protect another region against heat. DE 1 907 682 A discloses a gasket comprising a metal plate having channels.

In order to improve upon such gasket designs and to address the disadvantages of gaskets of the type discussed above, as well as others, the present invention seeks to assure deflection of the inner sealing portion prior to compression of the flexible stopper, to reduce bore distortion, to reduce liner recession, and to accommodate greater dynamic head lifting while more evenly distributing loads circumferentially about the combustion opening In addition, since the form of a gasket according to the invention has a lower-cost single layer carrier, it significantly reduces load loss resulting from the greater amount of creep caused by multiple layer constructions, as well as eliminating misalignment between multiple layers, tolerance stack up among multiple layers and associated load variations. The inventive gasket allows for carrier embossments that are preselected to have a desired relative flexibility, that provides greater capability to follow relative motion between the members being sealed, and that increases the gasket's ability to accommodate rough mating surfaces of the members over that of prior art multiple layer gaskets. It should be noted that gaskets constructed according to the present invention are applicable in a variety of cylinder head and cylinder block applications, such as those found in internal combustion engines or gas compressors, for example, as well as in intake or exhaust manifold sealing, fuel cell component sealing and numerous other automotive or non-automotive industrial applications.

The present invention provides an improved gasket for sealing between opposed mating surfaces of two or more members having openings therein and that are adapted to be forcibly mated together, continuously or at least intermittently, to clamp the gasket therebetween, thus sealing around such openings, which are laterally aligned for longitudinal communication with each other. A gasket according to the present invention includes a carrier having first and second laterally extending sides or surfaces defining a longitudinal thickness therebetween. The carrier includes a gasket opening (as well as other coolant, lubricant, fastener or other openings, as required in a given application), with the gasket opening being adapted to be laterally aligned in longitudinal communication with the openings in the mating surface of the members when the gasket is clamped between the mated members. The preferred carrier is resiliently flexible in the longitudinal direction, but is relatively rigid in comparison to other elements of the gasket. A resilient sealing material that is substantially more flexible than the carrier material is disposed on the laterally extending sides of the carrier for sealingly engaging the mated surfaces of the members at least adjacent their openings when the gasket is clamped between the mated members.

The carrier includes a longitudinally flexible inner sealing portion disposed laterally adjacent the gasket opening with the inner sealing portion being longitudinally offset relative to the remainder of said carrier portion (or relative to an intermediate carrier portion located laterally outward of the inner sealing portion). The inner sealing portion is offset in a longitudinal direction toward a first of the mating surfaces of the members when the gasket is being clamped therebetween and can be formed by way of embossing the relatively rigid (but still resiliently flexible) carrier, as well as by way of other forming methods or devices known to those skilled in the art. The inner sealing portion includes the above-mentioned resilient sealing material disposed on its laterally-extending sides for sealing engagement with the mating surfaces of the members when the gasket is clamped therebetween. These carrier features can be formed as embossments, for example, either before or after application of the resilient sealing material.

The carrier also includes a longitudinally flexible stopper portion spaced laterally outwardly, away from the gasket opening so that the inner sealing portion and the flexible stopper portion are on opposite lateral sides of the above-mentioned intermediate portion, or at least so that the flexible stopper portion is laterally outward relative to the inner sealing portion (i.e., with or without the intermediate carrier portion). The flexible stopper portion is longitudinally convex relative to the remainder of the carrier (or relative to the intermediate carrier portion) on a side of the flexible stopper oriented toward one of the mating surfaces and is longitudinally concave relative to the remainder of the carrier (or relative to the intermediate carrier portion) on an opposite side of the flexible stopper oriented toward another of the mating surfaces of the members. The stopper, which can have a generally trapezoidal shape, for example, thus flexibly and resiliently limits the amount of longitudinal compression of the inner sealing portion but is typically less flexible than the inner sealing portion. The inner sealing portion is thus maintained in sealing engagement with the mating surfaces of both of the members during any relative movement therebetween when the members are mated together.

The inner sealing portion is longitudinally offset to an extent greater than the extent of the longitudinal convexity of the flexible stopper so as to assure deflection of the inner sealing portion prior to compression of the flexible stopper. In addition, the resilient sealing material is disposed within, and completely fills the concave side of the flexible stopper member.

In any of the gasket embodiments according to the present invention, the inner sealing portion can optionally be longitudinally offset in various configurations, such as a generally "Z-shaped" half-embossment or a inclined or angled partially embossed or bent configuration, for example, as will become readily apparent to those skilled in the art from the drawings and from the following description and claims. Two or more flexible stoppers can also be optionally included in some or all of the embodiments of the invention, with such multiple flexible stoppers facing in opposite longitudinal directions, facing in the same longitudinal direction, or any combination of such orientations.

It should further be noted that gaskets according to the present invention can be advantageously used in a wide variety of applications, such as cylinder head and block sealing for internal combustion engines, gas compressors, or other devices having a sealed cylinder containing liquid or gaseous fluids, sealing intake, exhaust or other fluid conveying manifold applications, sealing between piping flanges, or sealingly isolating the interior from the exterior of housings or enclosures, for example. The present invention provides special advantages where relative movement can occur between the members being sealed, such as that due to thermal, mechanical or fluid conditions or environments presented by a particular applications. Those skilled in the art will undoubtedly recognize many other advantageous applications of gaskets according to the present invention.

Additional objects of the present invention, especially the following embodiments, may be useful and advantageous:
The gasket of claim 1, wherein said carrier is formed of a metal-containing material.
The gasket of claim 1, wherein said carrier is formed of a synthetic-containing material.
The gasket of claim 1, wherein said resilient sealing material is an elastomer-containing material.
The gasket of claim 1, wherein said resilient sealing material is screen-printed onto at least portions of said carrier.
The gasket of claim 1, wherein said gasket is adapted to be clamped between a cylinder head and a cylinder block of an internal combustion engine.
The gasket of claim 1, wherein said gasket is adapted to be clamped between a cylinder head and a cylinder block of a gas compressor.
The gasket of claim 1, wherein said gasket is adapted to be clamped between mated flanges of a gaseous fluid-conveying device.
The gasket of claim 1, wherein said gasket is adapted to be clamped between mated flanges of a liquid fluid-conveying device.
The gasket of claim 1, wherein said gasket is adapted to be clamped between mated pipe flanges.
The gasket of claim 1, wherein said gasket is adapted to be clamped between mated manifold flanges.
The gasket of claim 1, wherein said gasket is adapted to be clamped between mating surfaces of members defining an interior of an enclosure for sealingly isolating said enclosure interior from an exterior of said enclosure.
The gasket of claim 1, wherein said gasket is adapted to be clamped between mating surfaces of members that are releasably mated together.
The gasket of claim 1, wherein said gasket is adapted to be clamped between mating surfaces of members that are intermittently mated together.
The gasket of claim 1, wherein at least portions of said carrier are separated but interconnected by a portion of said resilient sealing material.
The gasket of claim 1, wherein the mating members are components of a fuel cell.
Further additional objects, advantages, and features of the present invention will become apparent from the following description and the appended claims, taken in conjunction with the accompanying drawings.

### BRIEF DESCRIPTION OF THE DRAWINGS

Figure 1 depicts one laterally-extending side of one exemplary preferred gasket according to the present invention, with the gasket being adapted for sealing between a cylinder head and a cylinder block.

Figure 2 is a partial cross-sectional view, taken along line 2-2 of Figure 1.

Figure 3 is a partial cross-sectional view, illustrating the exemplary gasket of Figure 1 in a partially compressed condition.

Figure 4 illustrates unloading curves for the exemplary gasket of Figure 1 and for a typical multiple layer prior art gasket, with load plotted against relative deflection of the mating members, in order to illustrate the invention's improved load retention characteristics.

Figure 5 is a partially exploded view, illustrating a typical multiple layer prior art gasket.

Figure 6 is a partially exploded view, similar to Figure 5, but illustrating the preferred, flexible but relatively rigid, single carrier member of Figure 1 sandwiched between two layers of the more highly flexible resilient sealing material.

Figures 7a and 7b illustrate an example of contact point stress values in opposite directions on opposite mating members during unloading between the mating members for a typical multiple layer prior art gasket.

Figures 8a and 8b are similar to Figures 7a and 7b, respectively, but illustrating such contact point stress values in opposite directions on opposite mating members during unloading for an exemplary gasket according to the present invention having a single layer carrier.

Figure 9 is a partial cross-sectional view of gasket not according to the present invention, which is similar to that of Figures 1 and 2, except that the flexible stopper portion is coated but not filled with resilient material on its concave side.

Figure 10 is a partial cross-sectional view, similar to that of Figures 2 and 9, but illustrating yet another alternate embodiment of a gasket according to the present invention, wherein the flexible stopper portion has a generally serpentine, "S-shaped" cross-sectional shape, essentially forming multiple flexible stoppers, with the concave portions of the flexible stopper portion to be filled with the resilient material.

Figure 11 is a partial cross-sectional view similar to that of Figures 2, 9 and 10, but illustrating still another alternate embodiment of a gasket according to the present invention, with the inner seal portion extending in a laterally and longitudinally inclined or angled direction, and with the flexible stopper portion to be filled with the resilient material.

Figures 12a and 12b illustrate a partial perspective view and a partial cross-sectional view, respectively, of an embodiment not belonging to the present invention, wherein the inner sealing portion of the carrier is substantially separated from the remainder of the carrier member but interconnected and held in place by two or more connecting struts.

Figures 13a and 13b are similar to those of Figures 12a and 12b, respectively, but illustrating yet an embodiment not belonging to of the present invention, wherein the inner sealing portion of the carrier member is separate from the remainder of the carrier member, but with the inner sealing portion and the intermediate carrier portion being interconnected by one or more "living hinge" sections of the resilient material.

Figure 14 is a partial schematic cross-section, conceptually illustrating other examples of other applications of the present invention. Figure 15 is a partial cross section similar to that of Figure 2, but illustrating an embodiment not belonging to the present invention, with the resilient sealing material covering only the inner sealing portion and the flexible stopper portion of the carrier member.

### DETAILED DESCRIPTION OF THE EMBODIMENTS

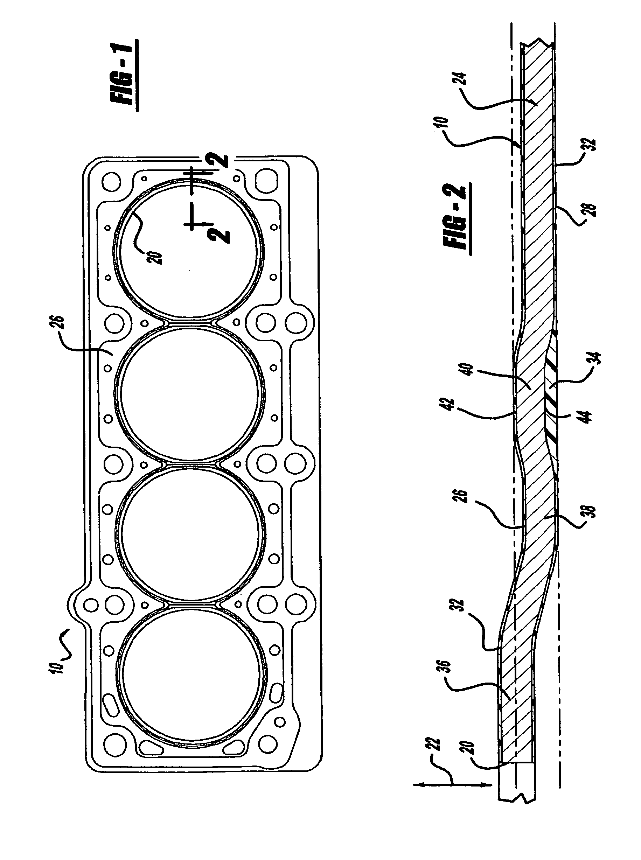

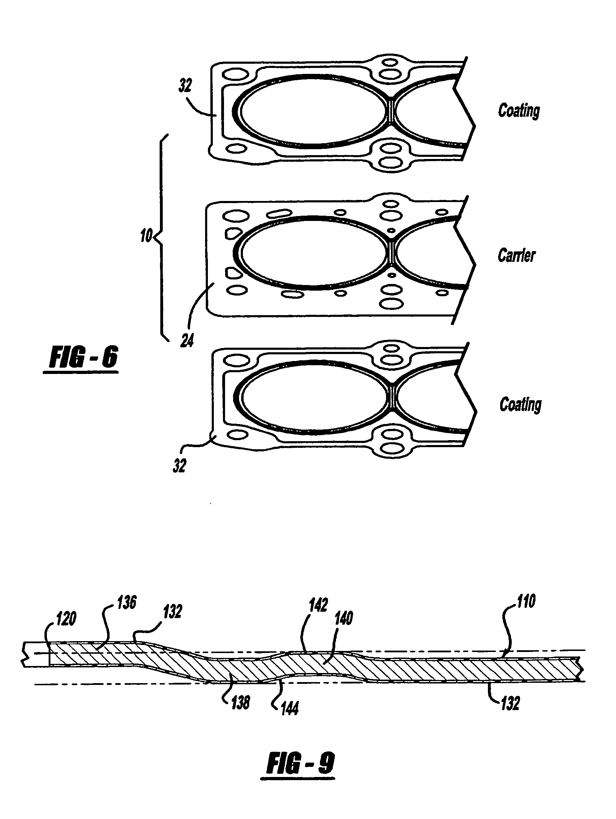

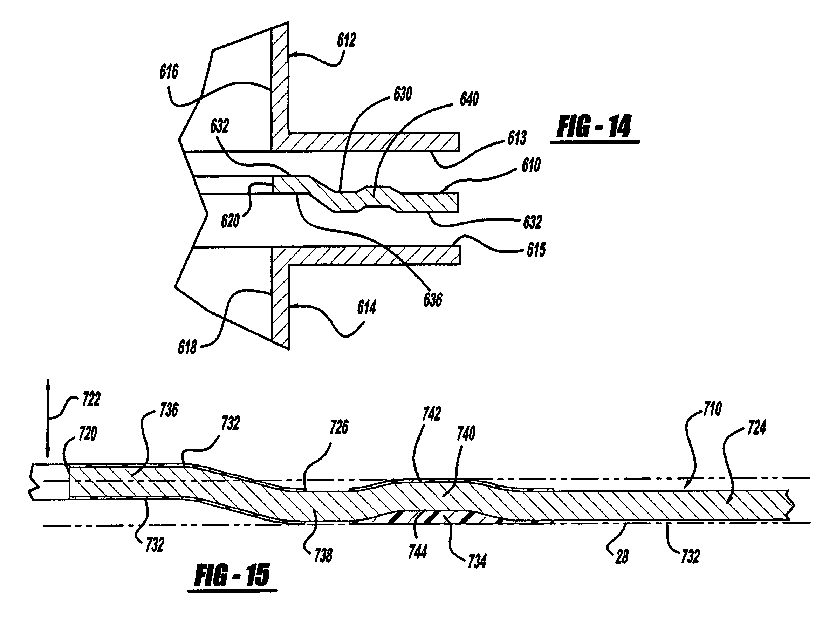

Figures 1 through 15 illustrate various embodiments of a gaskets. For purposes of example, only, Figures 1 through 15 are primarily directed toward a cylinder head gasket for sealing between mating surfaces of a cylinder head and a cylinder block on an internal combustion engine, gas compressor, or other similarly configured device. It should be noted, however, as will become apparent to those skilled in the art from the following description and claims, that the principles of the present invention are equally applicable to other devices used in the automotive and non-automotive industrial areas, such as flanged piping components, enclosure or housing seals, piping system manifold seals, or other devices where proper sealing and flexibility is desired between opposed mating surfaces of two or more members, as is illustrated conceptually in Figure 14.

Referring initially to Figures 1 through 4 and 6, one embodiment of the invention is represented by an exemplary gasket 10 for sealing between a mating member 12 and a mating member 14, which are adapted to be matingly clamped together, with the gasket 10 therebetween, such as by bolts or other conventional clamping devices. The mating members 12 and 14 have respective laterally-extending mating surfaces 13 and 15 surrounding respective openings 16 and 18, which are configured for conducting fluids between the members 12 and 14 generally in a longitudinal direction 22.

The gasket 10 of Figure 1 includes a relatively rigid, but still flexible, carrier 24, laterally-extending gasket sides 26 and 28, a complete coating of a much more flexible resilient sealing material 32, and a gasket opening 20 adapted to be laterally aligned with the openings 16 and 18 of the members 12 and 14 for longitudinal communication therebetween. The gasket 10 further includes a longitudinally-offset inner sealing portion 36, an intermediate portion 38, and a longitudinally offset flexible stopper 40.

The flexible stopper 40 (which can be characterized as a "full embossment") is longitudinally offset to a lesser extent than the inner sealing portion 36 (which can similarly be characterized as a "half embossment"). It is important to emphasize that, unlike the more rigid stoppers of prior art gaskets, the flexible stopper 40 is spaced away from the gasket opening 20 (as well as from the mating member openings 16 and 18), with the primary sealing component of the gasket (i.e., the inner sealing portion 36) and the intermediate portion 38 being between the flexible stopper 40 and the gasket opening 20. The flexible stopper 40 has a convex side 42 and a concave side 44, either of which can be oriented toward either of the members 12 or 14. The concave side 44 completely filled with the resilient sealing material 32. Typically, although not necessarily in a given application, the inner sealing portion 36 is more flexible than the flexible stopper 40.

Examples of materials for the carrier 40 can include semi-rigid synthetic or natural materials, metals or non-metals, with one example being composed of 301 stainless spring steel, full-hard, 0.3 mm thick (approximately 0.002 mm to 0.005 mm, or even wider ranges of thicknesses may be used in given applications). Lower hardnesses of steel or other metals can of course also be used if a reduction in spring force is desired in a particular application. However, such softer materials may, over time, exhibit a decrease in recovery performance during unloading conditions, such as those resulting from relative movement between the mating members. Other metals or metal alloys may also have application in the present invention, such as hardened carbon steel, inconel, titanium, or still others known to those skilled in the art.

Examples of materials for the resilient sealing material 32 in the illustrated example can include those that are applied to the carrier material prior to forming the carrier itself, those coated onto the carrier after it is formed, or even localized coating only in desired areas, such as those adjacent the gasket opening 20 or other areas adjacent fluid openings (e.g., for lubricant, for cooling, etc.), bolt holes, or the like. Such resilient sealing material 32 is on at least both sides of any or all of the inner sealing portion 36, the intermediate portion 24, or the flexible stopper 40. If desired to be applied only in localized areas of the gasket 20, resilient sealing material 32 can be applied in a variety of different ways, such as by screen printing, for example. In one form of the invention, the preferred resilient sealing material is FKM, having a thickness of approximately 0.0002 inch (5 µm) to approximately 0.003 inch (76 µm), although a much wider range of thicknesses can be used, as required or desirable in a particular application. Other resilient and conformable materials may also be suitable in any of a wide variety of applications, such as nitrile or silicone, for example.

In Figure 3, the gasket 10 is shown partially compressed between the members 12 and 14. In this condition, as well as in other more fully compressed conditions, the inner sealing portion 36 typically deflects first and provides the primary sealing about the openings 16, 18 and 20. The flexible stopper 40, being typically less flexible than the inner sealing portion 36, limits the amount of compression or deflection of the inner sealing portion 36, but it performs this function flexibly, unlike the much more rigid stoppers of prior art gaskets. This allows the gasket to provide more effective, repeatable and reliable sealing between the members 12 and 14, especially during lower load conditions, such as those resulting from relative movement between the members 12 and 14 due to compression, combustion, exhaust, or other varying pressures.

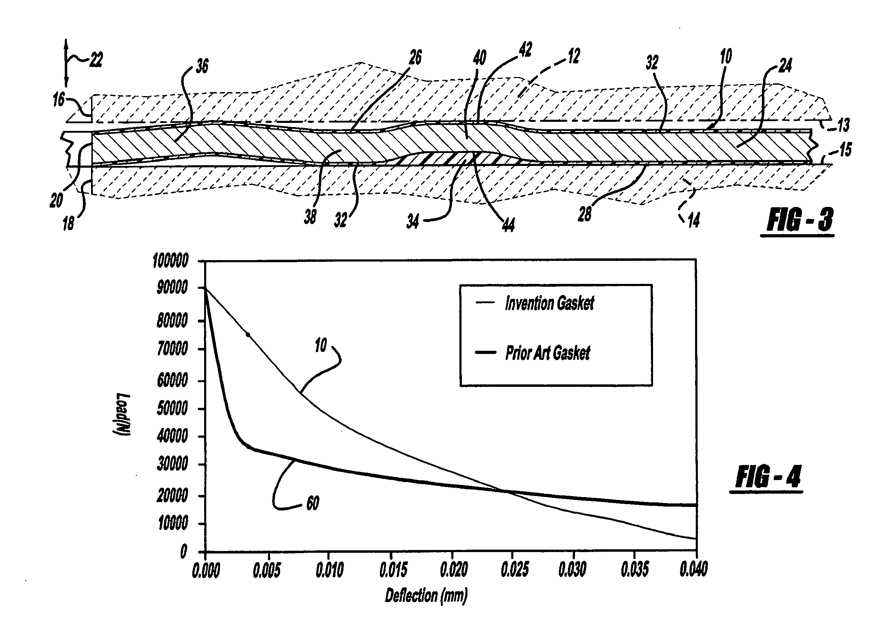

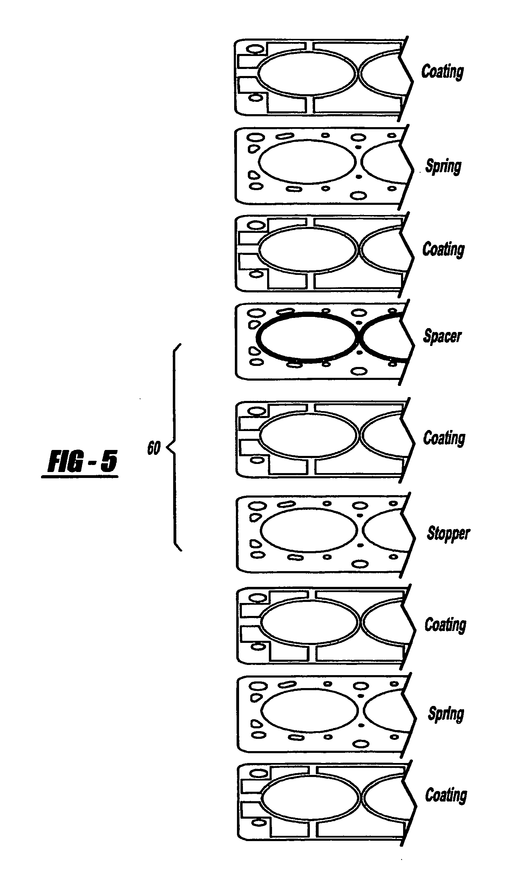

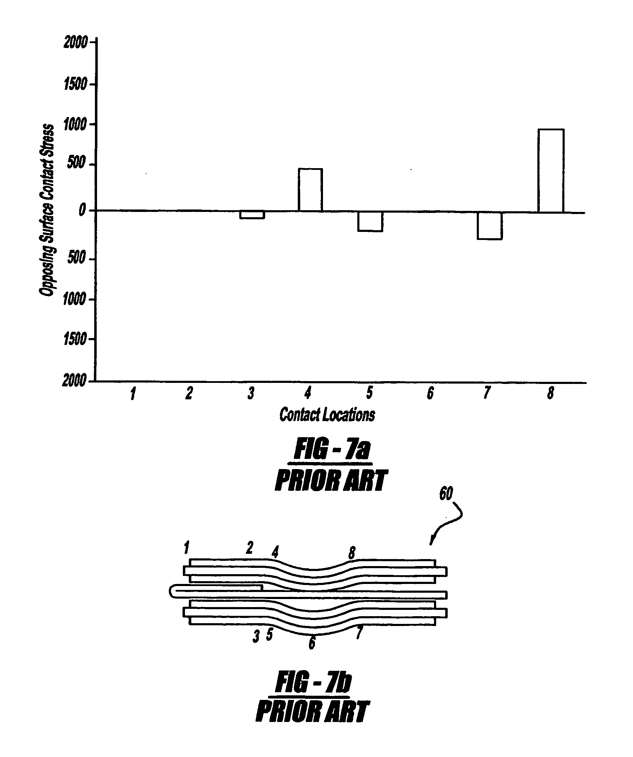

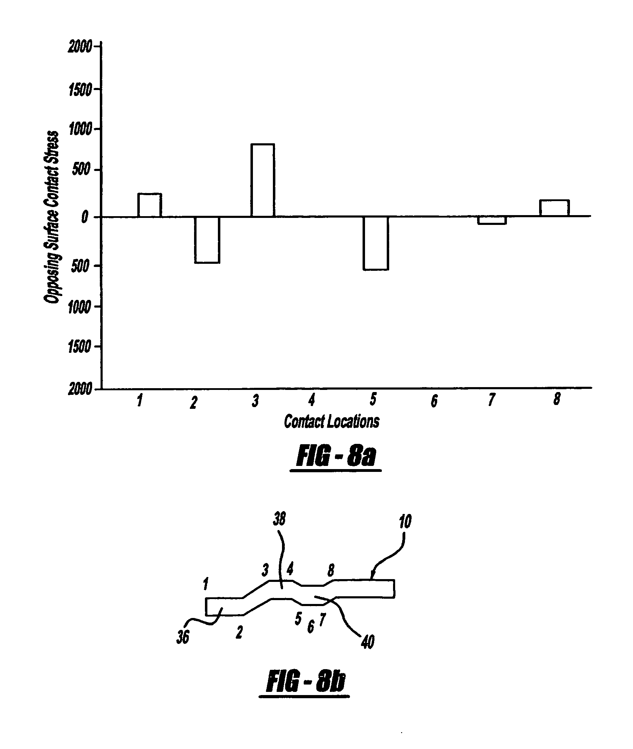

This advantage is further illustrated in Figure 4, wherein the invention is capable of higher (and thus more leak-proof) sealing loadings than is a typical multiple layer gasket of the prior art, such as that illustrated in Figure 5, for example, throughout design operating ranges. This advantageous comparison is also evident from Figures 7a and 7b (prior art) and Figures 8a and 8b, wherein the contact stresses on the opposed mating surfaces of the mating members (e.g., surfaces 13 and 15 on members 12 and 14, for example) are graphically represented at various location 1 through 8 on the mating surfaces.

Again referring to Figure 5, it is also important to note that such multiple layer prior art gaskets, such as the gasket 60, require sealing material on both sides of each layer, with the multiple and separately coated layers significantly adding to their cost, as well as presenting the other disadvantages discussed above.

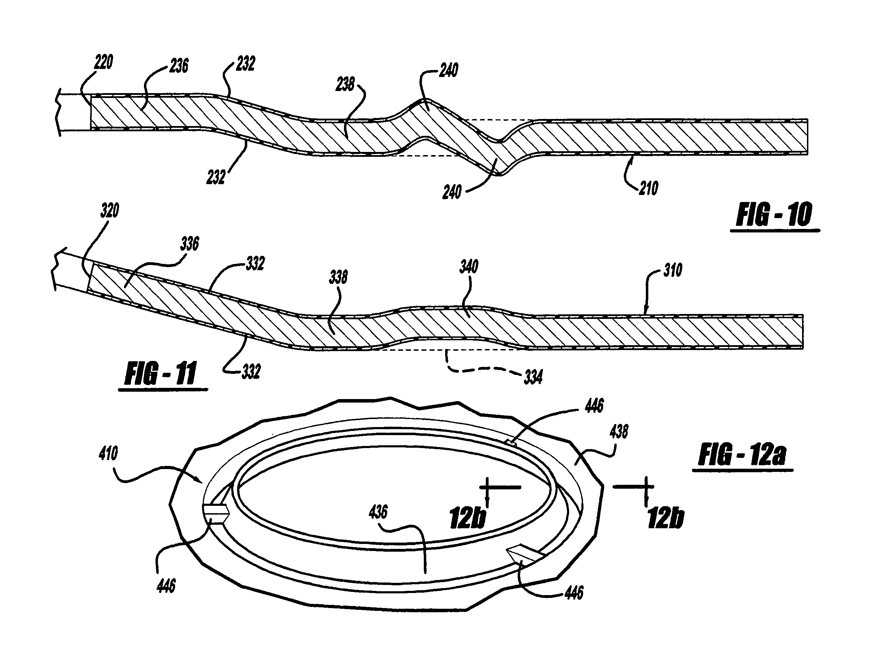

Figures 10 through 14 illustrate other alternate constructions or embodiments, with the reference numerals in Figures 10 through 14 indicating similar or corresponding elements to those of Figures 1 through 9, but with two-hundred through six hundred prefixes, respectively.

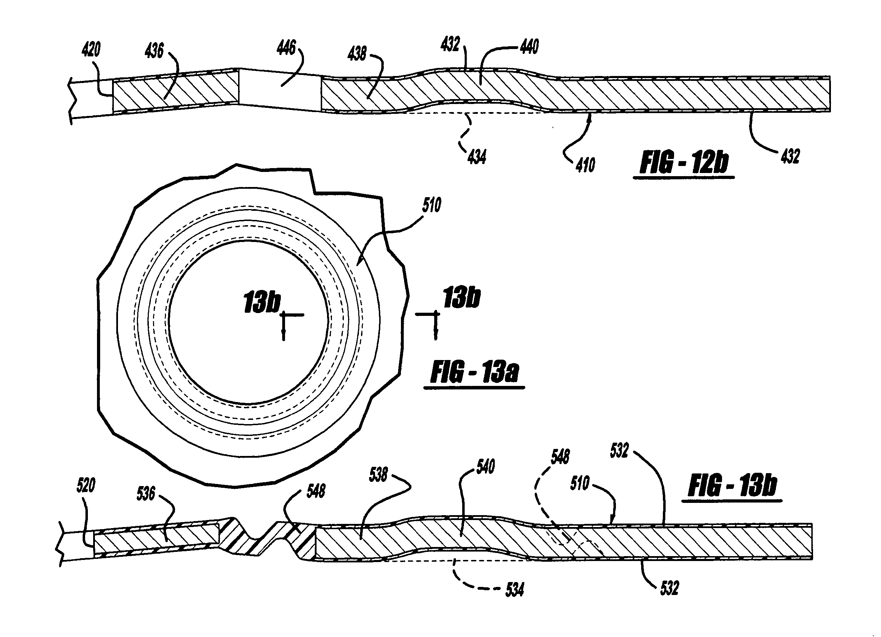

Figure 10 illustrates a gasket 210, a generally serpentine flexible stopper 240, effectively forming a number of flexible stopper portions 240. In Figure 11, the inner sealing portion 336 is longitudinally offset in an inclined or angled direction. Figures 12a and 12b illustrate a separated inner sealing portion 436 interconnected with the remainder of the gasket 410 and held in its proper position by one or more struts 446. Similarly, in Figures 13a and 13b, a separated inner sealing portion 536 is interconnected with the remainder of the gasket 510 and held in its proper position by one or more "living hinge" portions 548 of the resilient sealing material 532. It should be noted that this construction also allows for different thicknesses of the inner sealing portion 536 and the remainder of the gasket 510 (with either of them being thicker or thinner than the other) in order to obtain particular deformation and load retention characteristics in a given application.

Figure 14 schematically illustrates, in conceptual form, the use of a gasket 610 according to the present invention in a wide variety of applications, with the gasket 610 having any or any combination of the features, shapes or characteristics discussed above in connection with Figures 1 through 13. The members 612 can be flanges or other portions of any of numerous devices or structures, such as intake, exhaust or other manifolds, piping or other fluid-conveying devices, gas compression or other high pressure constructions, sealed housings or enclosures, or other sealing applications known to those skilled in the art. As mentioned above, the invention is especially advantageous where relative movement can occur between the members being sealed, such as that caused by thermal, mechanical or fluid conditions or environments presented by a particular applications. Figure 15 (taken along with the other figures) merely illustrates that the resilient sealing material 732 is included on selected portions of the carrier member 724 of the gasket 710. This embodiment does not belong to the present invention.

The foregoing discussion discloses and describes merely exemplary embodiments of the present invention for purposes of illustration only. One skilled in the art will readily recognize from such discussion, and from the accompanying drawings and claims, that various changes, modifications and variations can be made therein without departing from the scope of the invention as defined in the following claims.

## Claims

1. A gasket (10) for sealing between longitudinally opposed mating surfaces of at least a pair of members adapted to be forcibly mated together to clamp said gasket therebetween, the mating surfaces having openings therein laterally aligned in longitudinal communication with each other when the members are mated together, said gasket (10) comprising:
a relatively rigid carrier (24) having first and second laterally-extending sides (26, 28) defining a longitudinal thickness therebetween, said carrier (24) having a gasket opening (20) therethrough adapted to be laterally aligned in longitudinal communication with the openings in the mating surfaces of the members when said gasket (10) is clamped between the mated members;
a resilient sealing material (32) substantially more flexible than said carrier (24) and being disposed on at least portions of said laterally-extending sides (26, 28) of said carrier (24) for sealingly engaging the mating surfaces of the members adjacent the openings therein when said gasket (10) is clamped between the mated members;
a longitudinally flexible inner sealing portion (36) of said carrier disposed laterally adjacent said gasket opening, said inner sealing portion (36) being longitudinally offset relative to the remainder of the carrier (24), said inner sealing portion (36) being offset in a longitudinal direction toward a first of the members when said gasket (10) is clamped between the mated members, said inner sealing portion (36) having said resilient sealing material (32) disposed on at least portions of its laterally-extending sides (26, 28) for sealing engagement with the mating surfaces of the members when said gasket (10) is clamped between the mated members; and
a longitudinally flexible outer stopper portion (40) of said carrier (24) spaced laterally away from said gasket opening (20) and disposed laterally outward relative to said inner sealing portion (36), said flexible stopper portion (40) being longitudinally convex relative to the remainder of said carrier (24) on a side of said flexible stopper oriented toward said first of the members and being longitudinally concave relative to the remainder of said carrier (24) on an opposite side of said flexible stopper (40) oriented toward a second of the members, said flexible stopper (40) flexibly limiting the amount of longitudinal compression of said inner sealing portion (36) and being less flexible than said inner sealing portion (36), said inner sealing portion (36) being thereby maintained in said sealing engagement with the mating surfaces of both of the members during relative movement between the members when the members are mated together, **characterized in that**, the inner sealing portion (36) and the flexible stopper portion (40) are embossments of the carrier (24), which is a single layer carrier, wherein said inner sealing portion (36) is longitudinally offset to an extent greater than the extent of longitudinal convexity of the flexible stopper portion (40), whereas said resilient sealing material (32) covers all of said laterally-extending sides of said carrier (24) and said resilient material (32) completely fills the concave side (44) of the flexible stopper (40).

2. The gasket of claim 1, wherein said inner sealing portion (36) has a lateral dimension greater than the lateral dimension of said flexible stopper (40).

3. The gasket of claim 1, wherein said carrier (24) is formed of a steel-containing material.

4. The gasket of claim 1, wherein said resilient sealing material (32) is a rubber-containing material.

5. The gasket of claim 1, wherein said carrier is formed of a metal-containing material.

6. The gasket of claim 1, wherein said carrier is formed of a synthetic-containing material.

7. The gasket of claim 1, wherein said resilient sealing material is an elastomer-containing material.

8. The gasket of claim 1, wherein said resilient sealing material is screen-printed onto at least portions of said carrier.

## Patentansprüche

1. Dichtung (10) zur Abdichtung zwischen sich in Längsrichtung gegenüberliegenden Passflächen mindestens eines Paars von Gliedern, die zum kraftschlüssigen Zusammenfügen zwecks Einklemmens der Dichtung dazwischen ausgeführt sind, wobei die Passflächen Öffnungen darin aufweisen, die in Längsverbindung miteinander lateral aufeinander ausgerichtet sind, wenn die Glieder zusammengefügt sind, wobei die Dichtung (10) Folgendes umfasst:
einen relativ starren Träger (24) mit einer ersten und einer zweiten sich lateral erstreckenden Seite (26, 28), die dazwischen eine Längsdicke definieren, wobei der Träger (24) eine Dichtungsöffnung (20) **dadurch** aufweist, die zur lateralen Ausrichtung in Längsverbindung mit den Öffnungen in den Passflächen der Glieder, wenn die Dichtung (10) zwischen den zusammengefügten Gliedern eingeklemmt ist, ausgeführt sind;
ein elastisches Dichtungsmaterial (32), das wesentlich flexibler ist als der Träger (24) und zumindest an Teilen der sich lateral erstreckenden Seiten (26, 28) des Trägers (24) zum abdichtenden Eingriff der Passflächen der Glieder neben den Öffnungen darin, wenn die Dichtung (10) zwischen den zusammengefügten Gliedern eingeklemmt ist, angeordnet ist;
einen in Längsrichtung flexiblen inneren Dichtungsteil (36) des Trägers, der lateral neben der Dichtungsöffnung angeordnet ist, wobei der innere Dichtungsteil (36) in Längsrichtung bezüglich des Rests des Trägers (24) versetzt ist, wobei der innere Dichtungsteil (36) in Längsrichtung zu einem ersten der Glieder versetzt ist, wenn die Dichtung (10) zwischen den zusammengefügten Gliedern eingeklemmt ist, wobei bei dem inneren Dichtungsteil (36) das elastische Dichtungsmaterial (32) zumindest an Teilen seiner sich lateral erstreckenden Seiten (26, 28) zum abdichtenden Eingriff mit den Passflächen der Glieder, wenn die Dichtung (10) zwischen den zusammengefügten Gliedern eingeklemmt ist, angeordnet ist; und
einen in Längsrichtung flexiblen äußeren Stopperteil (40) des Trägers (24), der lateral von der Dichtungsöffnung (20) weg beabstandet und bezüglich des inneren Dichtungsteils (36) lateral nach außen angeordnet ist, wobei der flexible Stopperteil (40) bezüglich des Rests des Trägers (24) auf einer Seite des flexiblen Stoppers, die zum ersten der Glieder ausgerichtet ist, in Längsrichtung konvex ist und auf einer gegenüberliegenden Seite des flexiblen Stoppers (40), die zu einem zweiten der Glieder ausgerichtet ist, bezüglich des Rests des Trägers (24) in Längsrichtung konkav ist, wobei der flexible Stopper (40) das Ausmaß der Längskomprimierung des inneren Dichtungsteils (36) flexibel begrenzt und weniger flexibel ist als der innere Dichtungsteil (36), wobei der innere Dichtungsteil (36) **dadurch** während einer Relativbewegung zwischen den Gliedern, wenn die Glieder zusammengefügt werden, in abdichtenden Eingriff mit den Passflächen beider der Glieder gehalten wird, **dadurch gekennzeichnet, dass** der innere Dichtungsteil (36) und der flexible Stopperteil (40) Prägungen des Trägers (24) sind, bei dem es sich um einen Einzellagenträger handelt, wobei der innere Dichtungsteil (36) in Längsrichtung in einem größeren Ausmaß versetzt ist, als das Ausmaß der Längskonvexität des flexiblen Stopperteils (40), während das elastische Dichtungsmaterial (32) sämtliche der sich lateral erstreckenden Seiten des Trägers (24) bedeckt und das elastische Material (32) die konkave Seite (44) des flexiblen Stoppers (40) vollständig füllt.

2. Dichtung nach Anspruch 1, wobei der innere Dichtungsteil (36) eine größere laterale Abmessung als die laterale Abmessung des flexiblen Stoppers (40) aufweist.

3. Dichtung nach Anspruch 1, wobei der Träger (24) aus einem stahlhaltigen Material hergestellt ist.

4. Dichtung nach Anspruch 1, wobei das elastische Dichtungsmaterial (32) aus einem kautschukhaltigen Material hergestellt ist.

5. Dichtung nach Anspruch 1, wobei der Träger aus einem metallhaltigen Material hergestellt ist.

6. Dichtung nach Anspruch 1, wobei der Träger aus einem kunststoffhaltigen Material hergestellt ist.

7. Dichtung nach Anspruch 1, wobei es sich bei dem elastischen Dichtungsmaterial um ein elastomerhaltiges Material handelt.

8. Dichtung nach Anspruch 1, wobei das elastische Dichtungsmaterial durch Siebdruck auf zumindest Teilen des Trägers aufgebracht ist.

## Revendications

1. Joint (10) pour créer une étanchéité entre des surfaces d'accouplement longitudinalement opposées d'au moins une paire d'éléments adaptés pour être accouplés de force l'un à l'autre pour serrer ledit joint entre eux, les surfaces d'accouplement comportant des ouvertures alignées latéralement en communication longitudinale les unes avec les autres lorsque les éléments sont accouplés l'un à l'autre, ledit joint (10) comprenant:
un support relativement rigide (24) présentant des premier et deuxième côtés s'étendant latéralement (26, 28) définissant une épaisseur longitudinale entre eux, ledit support (24) comportant une ouverture de joint (20) à travers lui, adaptée pour être alignée latéralement en communication longitudinale avec les ouvertures dans les surfaces d'accouplement des éléments lorsque ledit joint (10) est serré entre les éléments accouplés;
une matière d'étanchéité élastique (32) sensiblement plus élastique que ledit support (24) et disposée sur au moins plusieurs parties desdits côtés s'étendant latéralement (26, 28) dudit support (24) pour engager hermétiquement les surfaces d'accouplement des éléments adjacents aux ouvertures dans celles-ci lorsque ledit joint (10) est serré entre les éléments accouplés;
une partie d'étanchéité intérieure longitudinalement flexible (36) dudit support disposée latéralement adjacente à ladite ouverture de joint, ladite partie d'étanchéité intérieure (36) étant décalée longitudinalement par rapport au reste dudit support (24), ladite partie d'étanchéité intérieure (36) étant décalée dans une direction longitudinale vers un premier des éléments lorsque ledit joint (10) est serré entre les éléments accouplés, ladite partie d'étanchéité intérieure (36) présentant ladite matière d'étanchéité élastique (32) disposée sur au moins plusieurs parties de ses côtés s'étendant latéralement (26, 28) pour s'engager hermétiquement avec les surfaces d'accouplement des éléments lorsque ledit joint (10) est serré entre les éléments accouplés; et
une partie de butée extérieure longitudinalement flexible (40) dudit support (24) espacée latéralement de ladite ouverture de joint (20) et disposée latéralement vers l'extérieur par rapport à ladite partie d'étanchéité intérieure (36), ladite partie de butée flexible (40) étant longitudinalement convexe par rapport au reste dudit support (24) sur un côté de ladite butée flexible orienté en direction dudit premier des éléments, et étant longitudinalement concave par rapport au reste dudit support (24) sur un côté opposé de ladite butée flexible (40) orienté en direction d'un deuxième des éléments, ladite butée flexible (40) limitant par flexion le degré de compression longitudinale de ladite partie d'étanchéité intérieure (36) et étant moins flexible que ladite partie d'étanchéité intérieure (36), ladite partie d'étanchéité intérieure (36) étant de ce fait maintenue dans ledit engagement d'étanchéité avec les surfaces d'accouplement des deux éléments pendant un déplacement relatif entre les éléments lorsque les éléments sont accouplés l'un à l'autre,
**caractérisé en ce que** la partie d'étanchéité intérieure (36) et la partie de butée flexible (40) sont des bosses du support (24), qui est un support monocouche, où ladite partie d'étanchéité intérieure (36) est décalée longitudinalement dans une plus grande mesure que l'ampleur de la convexité longitudinale de la partie de butée flexible (40), tandis que ladite matière d'étanchéité élastique (32) recouvre la totalité desdits côtés s'étendant latéralement dudit support (24) et que ladite matière élastique (32) remplit complètement le côté concave (44) de la butée flexible (40).

2. Joint selon la revendication 1, dans lequel ladite partie d'étanchéité intérieure (36) présente une dimension latérale supérieure à la dimension latérale de ladite butée flexible (40).

3. Joint selon la revendication 1, dans lequel ledit support (24) est constitué d'une matière contenant de l'acier.

4. Joint selon la revendication 1, dans lequel ladite matière d'étanchéité élastique (32) est constituée d'une matière contenant du caoutchouc.

5. Joint selon la revendication 1, dans lequel ledit support est constitué d'une matière contenant du métal.

6. Joint selon la revendication 1, dans lequel ledit support est constitué d'une matière contenant une matière synthétique.

7. Joint selon la revendication 1, dans lequel ladite matière d'étanchéité élastique est une matière contenant un élastomère.

8. Joint selon la revendication 1, dans lequel ladite matière d'étanchéité élastique est sérigraphiée sur au moins plusieurs parties dudit support.
